# DEMANDE DE BREVET EUROPEEN

(11) **EP 4 570 064 A1**
(43) Date de publication de la demande: **18.06.2025**
(21) Numéro de dépôt: 23307217.2
(22) Date de dépôt: 15.12.2023
(51) Int. Cl.: A01J 25/00, A01J 25/11, A01J 25/12, A01J 25/13, A01J 25/16, A01J 27/00

(54) **PROCÉDÉ DE MARQUAGE EN RELIEF DES FROMAGES À PÂTE MOLLE, PLAQUE DE MARQUAGE ET FAISSELLE UTILISÉ DANS UN TEL PROCÉDÉ**

(71) Demandeur: René, David Raymond Michel, Arita Cho Saga 844-0007 (JP)
(72) Inventeur: René, David Raymond Michel, Arita Cho Saga 844-0007 (JP)
(74) Mandataire: IPAZ

(57) **Abrégé**

L'invention concerne un procédé de marquage d'un fromage à patte molle obtenu à partir d'un caillé, comprenant les phases suivantes :
- une phase de moulage au cours de laquelle le caillé est versé dans une faisselle (1) posée debout au-dessus d'une plaque d'amorçage (4),
- une phase d'égouttage au cours de laquelle la faisselle est amenée à être successivement retournée, cette phase d'égouttage démarrant :
- par la faisselle posée debout au-dessus d'une première plaque (5), le caillé reposant sur une face supérieure de cette première plaque, et
- par une deuxième plaque (6) posée sur le caillé, la première plaque et la deuxième plaque étant dimensionnées pour glisser à l'intérieur de la faisselle le long de la paroi interne de la faisselle. Selon l'invention, la première plaque et/ou la deuxième plaque comporte sur une face un motif en protubérance (5d) destiné à venir en prise avec le caillé ; et après chaque retournement de la faisselle, la première plaque et la deuxième plaque restent respectivement en contact avec les mêmes surfaces du caillé.

## Description

La présente invention concerne un procédé de marquage d'un fromage à patte molle ou fromage frais obtenu à partir d'un caillé. L'invention concerne également une plaque de marquage et une faisselle utilisées pour la mise en oeuvre de ce procédé.

Les fromages à pâte pressée peuvent être marqués très facilement lors du processus de pressage. En revanche, en ce qui concerne les fromages à pâte molle, camembert, brie, etc, ce procédé n'est pas possible, car la conséquence d'un pressage serait la destruction du fromage.

D'une façon générale, la fabrication d'un fromage à patte molle comprend les étapes suivantes.

La phase de caillage consiste à produire un caillé par solidification du lait. Pour ce faire, on ajoute de la présure et des ferments dans le lait.

La phase de moulage consiste à verser le caillé dans un moule perforé.

La phase d'égouttage a pour but d'évacuer le petit lait contenu dans le caillé sur plusieurs heures.

Le formage obtenu peut être salé avant une phase d'affinage au cours de laquelle des moisissures se développent et forment un duvet sur la surface du fromage.

Dans ce processus de fabrication de fromage à pâte molle, le moule peut être une faisselle avec ou sans fond pour l'égouttage du caillé. Lorsqu'une faisselle sans fond est utilisée, le caillé s'égoutte directement dans le fond au travers de la natte fabriquée avec différentes matières comme le bambou, le plastique alimentaire, etc. Une plaque de métal peut être déposée au-dessus du caillé pour accélérer l'égouttage. Lors de la phase d'égouttage, le caillé dans la faisselle est retourné plusieurs fois pour homogénéiser l'acidification. S'il y a une plaque de métal au dessus, celle-ci est toujours replacée au-dessus pour accélérer l'égouttage.

Dans un procédé de fabrication de camembert avec moulage à la louche, il est nécessaire de verser chaque louche délicatement afin de ne pas détruire le caillé et d'attendre 50 minutes entre chaque louché et ce avec un total de 5 louchées. Faisant ainsi un temps de contact avec la natte de 200 minutes soit une durée de 3h20.

On connait le document US1090102 décrivant un procédé de marquage de fromage par impression de la caséine dans la croûte du fromage.

La présente invention a pour but la réalisation d'un marquage sur un fromage à patte mole ou un fromage frais.

Un autre but de l'invention est un marquage précis sans utilisation de presse qui viendrait détériorer le fromage.

On atteint au moins l'un des objectifs précités avec un procédé de marquage d'un fromage à patte molle ou fromage frais obtenu à partir d'un caillé, comprenant les phases suivantes :
- une phase de moulage au cours de laquelle le caillé est versé dans une faisselle positionnée verticalement avec une plaque d'amorçage disposée comme fond de la faisselle ; la faisselle se présentant sous la forme d'un cylindre creux perforé pour laisser passer du liquide,
- une phase d'égouttage au cours de laquelle la faisselle est amenée à être successivement retournée, cette phase d'égouttage démarrant :
- par la faisselle positionnée verticalement avec une première plaque disposée comme fond de la faisselle, le caillé reposant sur une face supérieure de cette première plaque, et
- par une deuxième plaque posée sur le caillé, la première plaque et la deuxième plaque étant dimensionnées pour glisser à l'intérieur de la faisselle le long de la paroi interne de la faisselle.

Selon l'invention, la première plaque et/ou la deuxième plaque comporte sur une face un motif en protubérance destiné à venir en prise avec le caillé, et en ce qu'après chaque retournement de la faisselle, la première plaque et la deuxième plaque restent respectivement en contact avec les mêmes surfaces du caillé.

Avec le procédé selon l'invention, on parvient à réaliser un marquage sur un fromage à patte molle. Pour ce faire, le marquage intervient avantageusement durant la phase d'égouttage. Avec une telle réalisation, on maintient le motif à la surface d'au moins une face du fromage et on forme ce motif en inverse dans le fromage au fur et à mesure de l'égouttage.

Le marquage est réalisé dans le temps, sur des étapes successives. Les étapes de retournements successifs de la faisselle permettent d'éviter que les plaques s'agglomèrent avec le caillé.

De préférence, pour le retournement, on détache délicatement les plaques avant de retourner la faisselle.

On produit ainsi un fromage à pâte molle avec un marquage au-dessus et/ou au-dessous de ce fromage tout en respectant les étapes de moulage à louche.

Le motif réalisé sur le fromage peut être le nom du fromage, un logo ou tout autre symbole ou écriture.

La faisselle est un cylindre qui peut avoir une section circulaire, carrée ou autre. On comprend que les plaques qui sont destinées à glisser dans la faisselle présente une forme compatible avec celle de la faisselle.

Les plaques sont dimensionnées de façon à ce que la forme périphérique soit quasiment identique à la forme interne de la faisselle. L'homme du métier sait quel écart de dimensions appliquer pour permettre le glissement des plaques dans la faisselle, avec évacuation de liquide sans passage du caillé.

Le liquide, qui est généralement de l'eau ou du petit lait, peut s'évacuer via les perforations réalisées sur la paroi de la faisselle.

Avec le procédé selon l'invention, on profite avantageusement de la sortie du petit lait pour réaliser un marquage pérenne, sûr et précis.

Durant la phase d'égouttage, entre deux retournements, le caillé est confiné à l'intérieur de la faisselle, entre une plaque sous le caillé et une autre plaque appuyant le dessus du caillé. A chaque retournement, la plaque qui se trouvait en dessous passe au-dessus, et celle qui était au dessus passe en dessous. Entre deux retournements, le caillé perd du liquide et s'affermit. Le caillé perd ainsi du volume, et la plaque placée au dessus glisse naturellement en restant posée sur la face supérieure du caillé.

Selon une caractéristique avantageuse de l'invention, la plaque d'amorçage et la première plaque peuvent être identiques. Cette première qui peut donc être utilisée comme plaque d'amorçage peut ne pas comporter de motif lorsque le caillé en cours de transformation ne permet pas d'appliquer un motif dès la phase de moulage. Cette première plaque également utilisée comme plaque d'amorçage peut comporter un motif lorsque le caillé en cours de transformation ne risque pas de coller à la plaque.

Avec une telle réalisation, les phases de moulage et d'égouttage se succèdent de manière plus aisée.

Selon un mode de réalisation de l'invention, la plaque d'amorçage peut ne pas comprendre le motif. Il peut s'agir d'une plaque qui est lisse sur la face destinée à être en contact avec le caillé. La surface lisse permet d'éviter que le caillé colle sur la plaque d'amorçage.

Selon une caractéristique avantageuse de l'invention, la phase de moulage peut comprendre les étapes suivantes :
- verser une ou plusieurs couches de caillé dans la faisselle avec la plaque d'amorçage sans motif disposée au fond de la faisselle,
- lorsque l'ensemble du caillé prévu est versé dans la faisselle, placer la deuxième plaque sur le dessus du caillé versé,
- retourner l'ensemble comprenant la faisselle, la plaque d'amorçage et la deuxième plaque de façon à positionner la faisselle sur la deuxième plaque,
- remplacer la plaque d'amorçage par la première plaque,
- retourner l'ensemble comprenant la faisselle, la première plaque et la deuxième plaque de façon à positionner la faisselle sur la première plaque.

Avec le procédé selon l'invention, la phase de moulage comprend le remplissage de la faisselle avec du caillé, la plaque d'amorçage étant placée en dessous. A la fin du remplissage, on place la deuxième plaque au dessus, on retourne tout de suite la faisselle, on remplace la plaque d'amorçage par la première plaque (dans le cas où la plaque d'amorçage est différente de la première plaque), et on retourne de nouveau la faisselle pour avoir la première plaque en dessous au début de la phase d'égouttage. Les deux retournements durant la phase de moulage peuvent être réalisés immédiatement, c'est-à-dire en quelques secondes ou quelques minutes selon la rigidité du caillé, par exemple 15 minutes, alors que la durée entre deux retournements pendant la phase d'égouttage est de plusieurs dizaines de minutes, voire plusieurs heures.

Ce mode de réalisation permet de réaliser le moulage sans tenir compte du marquage. La phase d'égouttage démarre ainsi avec deux nouvelles plaques, la première plaque et la deuxième plaque.

Selon l'invention, la phase de moulage peut comprendre les étapes suivantes :
- verser une ou plusieurs couches de caillé dans la faisselle avec la plaque amorçage sans motif disposée au fond de la faisselle,
- lorsque l'ensemble du caillé prévu est versé dans la faisselle, placer une deuxième plaque d'amorçage également sans motif sur le dessus du caillé versé.

Ce mode de réalisation peut notamment être mis en oeuvre dans le cas où la fabrication du fromage nécessite de reposer le caillé plusieurs heures avant de démarrer la phase d'égouttage. Par exemple, les deux plaques d'amorçage permettent ainsi de contenir le caillé jusqu'à ce que la consistance de ce dernier soit convenable pour pouvoir plaquer la première plaque et la deuxième plaque.

Selon un mode de réalisation avantageux de l'invention, la faisselle peut comprendre le long de sa paroi interne un premier repère de forme complémentaire à un deuxième repère réalisé sur chaque plaque destinée à glisser dans la faisselle, de sorte que les plaques peuvent glisser dans la faisselle avec toujours une même orientation.

Un tel repère est de nature protubérante ou creuse et est réalisé par exemple sur toute la hauteur de la faisselle. Lors d'un retournement pendant la phase d'égouttage, les plaques sont manipulées et peuvent être détachées de la surface du caillé puis replacées. Lorsqu'une plaque porte un motif, pour que ce motif vienne s'encastrer exactement dans les sillons déjà réalisés sur la surface du caillé avant le retournement, le repère empêche la plaque de pivoter. Si pendant le retournement, une plaque doit être sortie puis replacée dans la faisselle, le repère permet de replacer cette plaque selon une même orientation, en replaçant le motif dans les sillons déjà existants.

Avantageusement, le repère peut être un méplat et la faisselle peut présenter une section circulaire.

D'autres formes de repère peuvent être envisagées, comme une pointe, un triangle, un cercle, ...

Selon l'invention, la première plaque et/ou la deuxième plaque peut comporter des rainures réalisées sur une partie de l'épaisseur de la plaque sur la face destinée à être en contact avec le caillé. Ces rainures permettent de laisser une empreinte sur la surface du fromage.

A titre d'exemple, lorsque la première plaque et la deuxième plaque comportent chacun un motif, les deux motifs peuvent être identiques ou différents. L'invention propose le marquage sur une face, sur deux faces avec un motif identique sur les deux faces ou deux motifs différents. On peut ainsi personnaliser chaque face.

La phase d'égouttage peut être suivie, immédiatement ou pas, d'une phase d'affinage pendant laquelle au moins une plaque d'affinage est placée sous le fromage, cette plaque d'affinage comprenant le motif sur la face en contact avec le fromage.

Ainsi, lors de l'affinage, on peut prévoir de continuer le marquage. Le motif utilisé lors de l'égouttage est également utilisé pour l'affinage, de préférence sur une seule face. La face libre, au dessus, est à l'air libre pour permettre aux bactéries fromagères de se développer et couvrir de duvet le dessus du fromage, avec ou sans marquage. S'il y a un marquage au dessus, il sera renforcé lors du prochain retournement car la plaque d'affinage peut rester en dessous à chaque retournement.

Lorsque le fromage n'est marqué que sur une seule face, durant l'affinage, la plaque d'affinage comportant le motif peut constamment être posée sur la face marquée à chaque retournement. La face non marquée peut rester à l'air libre lorsque placée au dessus et par exemple être posée sur une surface plane lorsque placée en dessous.

Selon un mode de réalisation, la plaque d'affinage peut avantageusement être ajourée sur la partie ne comportant pas le motif. L'air peut ainsi atteindre facilement la surface du fromage.

Selon un mode de réalisation de l'invention, lorsque le fromage est marqué sur les deux faces, la phase d'affinage peut comprendre plusieurs étapes de retournement du fromage reposant sur la plaque d'affinage ; chaque retournement comprend les étapes suivantes :
- poser une plaque d'affinage secondaire sur le fromage,
- retourner l'ensemble comprenant la plaque d'affinage placée en dessous du fromage, le fromage et la plaque d'affinage secondaire placée au dessus du fromage,
- retirer la plaque d'affinage placée désormais au dessus du fromage.

Un tel processus permet de continuer à marquer les deux faces du fromage durant toute la phase d'affinage qui peut durer plusieurs semaines.

Les bactéries peuvent se développer sur les zones libres ajourées. Les sillons réalisés sur la surface du fromage par le motif restent clairement visibles à la fin de la phase d'affinage.

Selon un autre aspect de l'invention, il est proposé une plaque de marquage d'un fromage à patte molle ou fromage frais obtenu à partir d'un caillé, comprenant une plaque en matériau biocompatible et un motif en matériau biocompatible réalisé sur une face de la plaque et en protubérance par rapport à la surface de cette face, ce motif étant destiné à venir en prise avec le caillé.

Cette plaque de marquage peut comprendre en outre un repère en périphérie destiné à coopérer avec un repère complémentaire réalisé sur une faisselle.

Selon encore un autre aspect de l'invention, il est également proposé une faisselle pour un marquage d'un fromage à patte molle ou fromage frais obtenu à partir d'un caillé, comprenant :
- un cylindre creux perforé pour laisser passer du liquide, et
- un repère complémentaire réalisé le long d'une paroi interne de la faisselle et destiné à coopérer avec un repère d'une plaque de marquage.

D'autres avantages et caractéristiques de l'invention apparaîtront à l'examen de la description détaillée d'un mode de mise en oeuvre nullement limitatif, et des dessins annexés, sur lesquels :
[Fig. 1] : La figure 1 est une vue schématique de haut, en perspective, de la faisselle sans fond selon l'invention,
[Fig. 2] : La figure 2 est une vue schématique globale, en perspective, de la faisselle sans fond selon l'invention,
[Fig. 3] : La figure 3 est une vue schématique d'une plaque d'amorçage, sans motif, selon l'invention,
[Fig. 4] : La figure 4 est une vue schématique d'une première plaque avec motif selon l'invention,
[Fig. 5] : La figure 5 est une vue en coupe schématique illustrant la première plaque de marquage et une deuxième plaque de marquage avec un motif différent de celui de la première plaque de marquage, selon l'invention,
[Fig. 6] : La figure 6 est une vue schématique illustrant des étapes d'une phase de moulage pour un fromage destiné à être marqué sur les deux faces,
[Fig. 7] : La figure 7 est une vue schématique globale, en perspective, de la faisselle avec une première plaque et une deuxième plaque, les deux plaques étant destinées à glisser à l'intérieur de la faisselle, selon l'invention,
[Fig. 8] : La figure 8 est une vue schématique illustrant des étapes d'une phase d'égouttage selon l'invention,
[Fig. 9] : La figure 9 est une vue schématique du fromage marqué avant affinage, selon l'invention,
[Fig. 10] : La figure 10 est une vue schématique d'une plaque d'affinage selon l'invention,
[Fig. 11] : La figure 11 est une vue schématique d'une étape d'affinage avec une première plaque d'affinage placée sous le fromage selon l'invention,
[Fig. 12] : La figure 12 est une vue schématique d'une autre étape d'affinage avec une autre plaque d'affinage placée sous le fromage retourné par rapport à la figure 10, selon l'invention.
[Fig. 13] : La figure 13 est une photo illustrant un fromage constitué avec un motif marqué sur la face supérieure selon l'invention.

Les modes de réalisation qui seront décrits dans la suite ne sont nullement limitatifs ; on pourra notamment mettre en oeuvre des variantes de l'invention ne comprenant qu'une sélection de caractéristiques décrites par la suite isolées des autres caractéristiques décrites, si cette sélection de caractéristiques est suffisante pour conférer un avantage technique ou pour différencier l'invention par rapport à l'état de la technique antérieur. Cette sélection comprend au moins une caractéristique de préférence fonctionnelle sans détails structurels, ou avec seulement une partie des détails structurels si cette partie uniquement est suffisante pour conférer un avantage technique ou pour différencier l'invention par rapport à l'état de la technique antérieur.

En particulier toutes les variantes et tous les modes de réalisation décrits sont prévus pour être combinés entre eux dans toutes les combinaisons où rien ne s'y oppose sur le plan technique.

Bien que l'invention n'y soit pas limitée, on va maintenant décrire quelques étapes de fabrication d'un fromage à patte molle avec un marquage différent sur les deux faces.

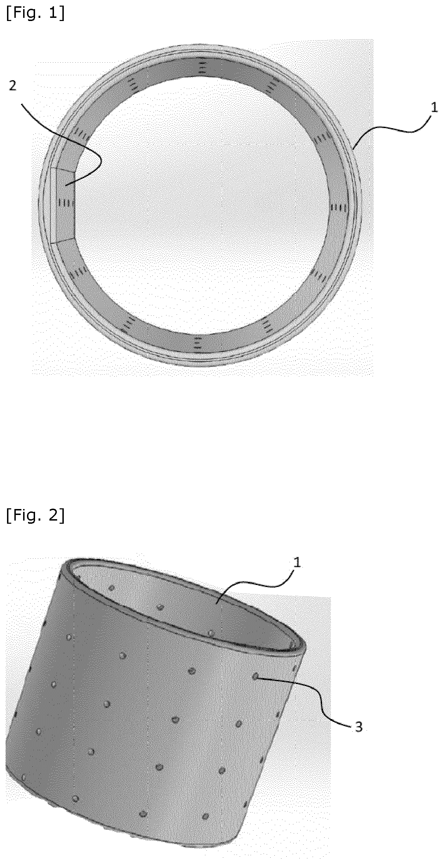

Sur les figures 1 et 2, on distingue une faisselle 1 sous la forme d'un cylindre creux sans fonds. La section de ce cylindre est circulaire, mais d'autres formes de section peuvent être utilisées comme par exemple la forme carrée ou triangulaire.

Un repère 2 est réalisé à l'intérieur de la faisselle 1. Il s'agit d'un méplat qui s'étend sur toute la hauteur de la faisselle.

Des trous 3 sont réalisés à travers la paroi de la faisselle 1, sur tout le pourtour, et sont destinés à l'évacuation d'eau durant la phase d'égouttage. Ces trous 3 sont réalisés par groupe de quatre alignés selon la hauteur comme on le voit sur la figure 2. Ces groupes sont équitablement répartis sur le pourtour de la faisselle. D'autres dispositions aléatoires ou pas peuvent être retenues pour la répartition des trous à travers la paroi de la faisselle.

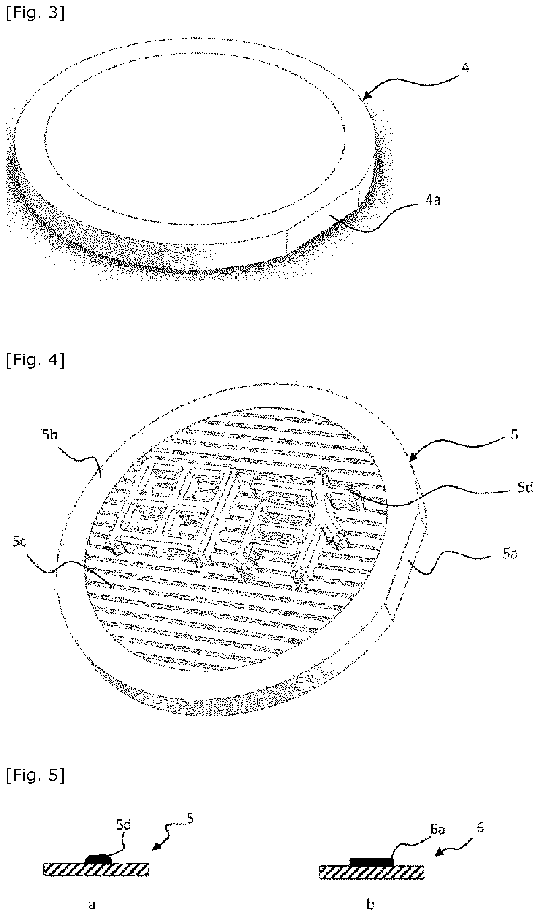

On va maintenant décrire une phase de moulage selon l'invention. Pour ce faire, on va utiliser la faisselle telle décrite sur les figures 1 et 2, ainsi qu'une plaque d'amorçage comme illustrée sur la figure 3 et une première plaque de marquage 5 comme illustrée sur la figure 4.

Sur la figure 3, la plaque d'amorçage 4 est une plaque en forme de cylindre plein aplati. La section de cette plaque d'amorçage 4 est circulaire de diamètre légèrement inférieur au diamètre interne de la faisselle. Par légèrement inférieur, on entend un écart de diamètre permettant à la plaque d'amorçage de glisser à l'intérieur de la faisselle par gravité sans que du caillé puisse passer dans l'interstice entre la faisselle et la plaque d'amorçage.

On distingue un repère complémentaire 4a qui est prévu pour faire face au repère 2 dans la faisselle.

Toutefois, on peut envisager une plaque d'amorçage de forme et dimensions différentes, par exemple de section carré avec un côté plus grand que le diamètre de la faisselle. Une telle plaque d'amorçage ne nécessite pas de repère complémentaire car elle n'est destinée à glisser à l'intérieur de la faisselle. Une telle plaque d'amorçage servirait simplement à poser la faisselle dessus et à retenir le caillé.

Sur la figure 4, la première plaque de marquage 5 est une plaque en forme de cylindre plein aplati. La section de cette première plaque de marquage 5 est circulaire de diamètre légèrement inférieur au diamètre interne de la faisselle. Par légèrement inférieur, on entend un écart de diamètre permettant à la première plaque de marquage de glisser à l'intérieur de la faisselle par gravité sans que du caillé puisse passer dans l'interstice entre la faisselle et la première plaque de marquage 5.

On distingue un repère complémentaire 5a prévu pour faire face au repère 2 lorsque la première plaque est insérée dans la faisselle 1. Ce repère complémentaire est un méplat, c'est-à-dire une surface plane formée en découpant la première plaque de marquage selon une corde.

On distingue également une couronne 5b en périphérie de la première plaque de marquage. Cette couronne présente une surface lisse qui sera en contact avec le caillé.

La couronne 5b délimite une zone intérieure de la première plaque de marquage dans laquelle sont réalisées des rainures parallèles 5c. Ces rainures parallèles 5c sont réalisées dans une partie de l'épaisseur de la première plaque de marquage, c'est-à-dire qu'elles ne traversent pas l'épaisseur de la première plaque de marquage. Les bandes non rainurées sont à la même hauteur que la surface de la couronne lisse 5b.

On distingue également un motif 5d qui est une écriture en protubérance par rapport à la surface générale de la première plaque de marquage, cette surface générale comprenant la surface de la couronne 5b. Le motif 5d est une écriture réalisée en négatif pour être lisible lorsque transférée sur la surface du fromage.

Sur la figure 5, l'illustration 5a est une vue en coupe de la première plaque de marquage 5 avec le motif 5d. L'illustration 5b est une vue en coupe d'une deuxième plaque de marquage 6 avec son motif 6a qui est différent du motif 5d. La deuxième plaque de marquage comprend les mêmes caractéristiques, formes et dimensions que la première plaque de marquage 5, seul le motif diffère.

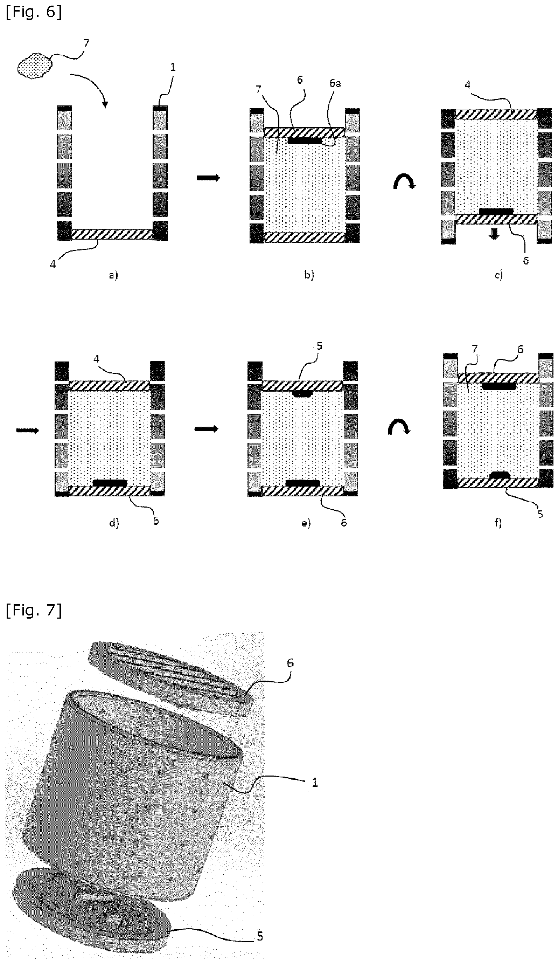

Sur la figure 6, on distingue une première étape 6a au cours de laquelle on verse le caillé 7 dans la faisselle 1 posée debout avec la plaque d'amorçage 4 disposée comme fond de la faisselle 1.

A l'étape 6b, l'ensemble du caillé 7 est versé dans la faisselle 1. On vient recouvrir le caillé 7 avec la deuxième plaque de marquage 6, le motif 6a s'insérant dans le caillé 7. A l'étape 6c, on retourne l'ensemble : la faisselle 1, la plaque d'amorçage 4 et la deuxième plaque de marquage 6. Avec la gravité, le caillé 7, la deuxième plaque de marquage 6 et la plaque d'amorçage 4 glissent vers le bas de sorte que la deuxième plaque de marquage 6 se trouve au fond de la faisselle 1 comme on peut le voir sur l'étape 6d.

A l'étape 6e, on remplace la plaque d'amorçage 4 par la première plaque de marquage 5. Puis on retourne l'ensemble à l'étape 6f. De préférence, les étapes 6a à 6f sont réalisées successivement sans temporisation entre chaque étape. On obtient ainsi une configuration où le caillé 7 est contenu dans la faisselle entre deux plaques de marquage. Dans la réalisation telle que décrite sur les étapes 6a à 6f, on a fait en sorte de retrouver à la fin de la phase de moulage, la première plaque de marquage en contact avec la partie du caillé qui a été versée en premier. Cela a facilité le marquage.

La figure 7 est une vue éclatée, en perspective, de la faisselle 1, de la première plaque de marquage 5 disposée sous la faisselle, et de la deuxième plaque de marquage 6 disposée au dessus de la faisselle. Les deux plaques sont prévues pour glisser à l'intérieur de la faisselle 1.

Bien que la phase de moulage soit décrite avec une plaque d'amorçage sans motif, il est possible d'utiliser une plaque d'amorçage avec motif dans le cas par exemple où la constitution du caillé autorise un repos de longues durées, notamment plusieurs heures, sur un motif sans que le caillé ne s'agglomère à ce motif.

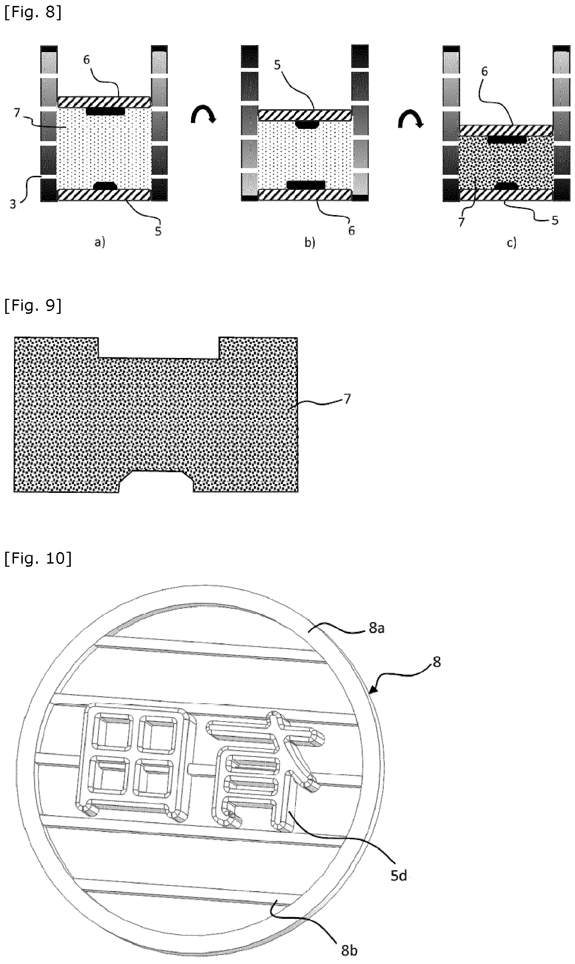

La phase d'égouttage est décrite conformément à la figure 8. Elle démarre selon la configuration de l'étape 6f. L'ensemble repose pendant plusieurs heures. Le liquide, tel que le petit lait, contenu dans le caillé 7 s'évacue naturellement via les trous 3. Le volume global du caillé 7 diminue. Cela entraîne un glissement vers le bas du fait de la gravité de la deuxième plaque de marquage 6. Le motif reste inséré dans le caillé 7.

A l'étape 8b, on retourne l'ensemble de façon à avoir la deuxième plaque de marquage 6 sous le caillé et la première plaque de marquage au dessus du caillé. Chaque plaque de marquage conserve son motif inséré dans le caillé. Grâce aux différents repères réalisés sur les plaques de marquage et dans la faisselle, les plaques de marquage glissent dans la faisselle toujours selon une même orientation. Ainsi, malgré les différents mouvements dus aux retournements, les motifs restent dans les mêmes sillons dans le caillé. Pendant un retournement, une plaque peut être sortie de la faisselle puis réintroduit, sans pour autant générer d'autres sillons dans le caillé.

Après une phase de temporisation de plusieurs heures par exemple, à l'étape 8c, l'ensemble est de nouveau retourné. De tels retournements peuvent être opérés de nombreuses fois jusqu'à obtenir une consistance souhaitée du caillé transformé en fromage. Durant ces retournements, le volume du caillé diminue au fil du temps, et les plaques de marquage suivent s'adaptent en glissant le long de la faisselle.

Le fromage formé est tel qu'illustré en vue de coupe sur la figure 9 avec un motif sur chaque face.

Ce fromage peut ensuite reposer en dehors de la faisselle de façon à ce que des bactéries appropriées se développent ; notamment au cours d'une phase d'affinage.

Sur la figure 10, on distingue une plaque d'affinage 8 constituée d'une couronne périphérique 8a à l'intérieur de laquelle est réalisée une grille 8b rendant la plaque d'affinage ajourée. Le même motif 5d que sur la première plaque de marquage 5 est monté sur la grille 8b.

La grille 8b permet à l'air de pénétrer largement à travers la plaque d'affinage et d'atteindre une grande partie de la surface du fromage. Cette grille peut être un quadrillage ou toute autre forme ajourée.

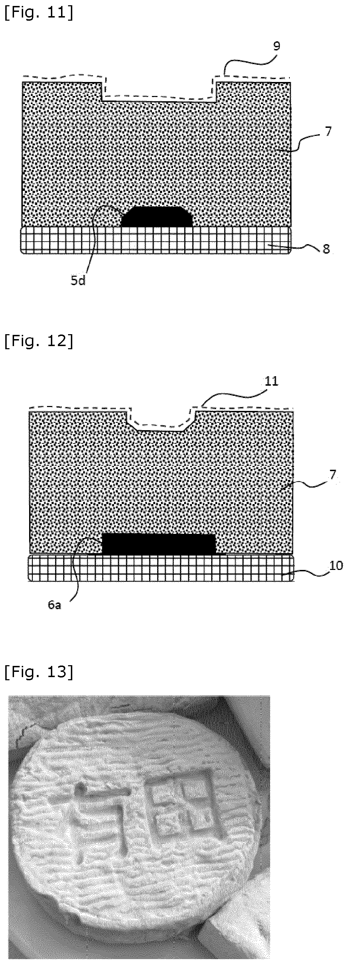

Sur la figure 11 est illustrée une étape d'affinage au cours de laquelle le formage 7 est à l'air libre et posé sur la plaque d'affinage 8. Le motif 5d permet d'assurer une continuité de marquage. Sur la face libre du fromage, un duvet 9 se forme naturellement sur l'ensemble de la surface, y compris dans le sillon formé par le motif 6a.

Sur la figure 12 est illustrée une étape d'affinage au cours de laquelle le formage 7 est à l'air libre et posé sur une deuxième plaque d'affinage 10 portant le même motif 6a que la deuxième plaque de marquage 6. Ce motif 6a permet d'assurer une continuité de marquage. Sur la face libre du fromage, un duvet 11 se forme naturellement sur l'ensemble de la surface, y compris dans le sillon formé par le motif 5d.

Lors du retournement du fromage pour passer de la configuration de la figure 11 à la configuration de la figure 12 par exemple, on peut placer la deuxième plaque d'affinage 10 au-dessus du fromage. Ainsi, en prenant les deux plaques d'affinage 8 et 10, avec le fromage 7 coincé au milieu, on peut retourner l'ensemble sans détruire le marquage sur le fromage. Une fois retourné, on laisse la plaque d'affinage 10 du dessous en place, pour préserver la trace du marquage en dessous. On retire la plaque d'affinage 8 du dessus pour laisser l'air parvenir jusqu'aux bactéries fromagères et ainsi les laisser se développer et couvrir de duvet le marquage. Le marquage sera renforcé lors du prochain retournement en laissant la plaque d'affinage en dessous.

La figure 13 est une photographie de dessus d'un fromage marqué par le motif 5d selon l'invention.

Les plaques et la faisselle selon l'invention peuvent par exemple être conçues à partir de l'un ou une combinaison des matériaux alimentaires suivants : aluminium, plastique alimentaire, porcelaine, ...

Avec le procédé selon l'invention, on utilise au moins une plaque de marquage pour maintenir un motif dans le caillé sur une face et ainsi former ce motif en inverse dans le fromage au fur et à mesure de l'égouttage et de l'affinage.

Bien sûr, l'invention n'est pas limitée aux exemples qui viennent d'être décrits et de nombreux aménagements peuvent être apportés à ces exemples sans sortir du cadre de l'invention.

## Revendications

1. Procédé de marquage d'un fromage à patte molle ou fromage frais obtenu à partir d'un caillé, comprenant les phases suivantes :
- une phase de moulage au cours de laquelle le caillé est versé dans une faisselle positionnée verticalement avec une plaque d'amorçage disposée comme fond de la faisselle ; la faisselle se présentant sous la forme d'un cylindre creux perforé pour laisser passer du liquide,
- une phase d'égouttage au cours de laquelle la faisselle est amenée à être successivement retournée, cette phase d'égouttage démarrant :
- par la faisselle positionnée verticalement avec une première plaque disposée comme fond de la faisselle, le caillé reposant sur une face supérieure de cette première plaque, et
- par une deuxième plaque posée sur le caillé, la première plaque et la deuxième plaque étant dimensionnées pour glisser à l'intérieur de la faisselle le long de la paroi interne de la faisselle,
**caractérisé en ce que** la première plaque et/ou la deuxième plaque comporte sur une face un motif en protubérance destiné à venir en prise avec le caillé, et **en ce qu'**après chaque retournement de la faisselle, la première plaque et la deuxième plaque restent respectivement en contact avec les mêmes surfaces du caillé.

2. Procédé selon la revendication 1, **caractérisé en ce que** la plaque d'amorçage et la première plaque sont identiques.

3. Procédé selon la revendication 1 ou 2, **caractérisé en ce que** la plaque d'amorçage ne comprend pas le motif.

4. Procédé selon la revendication 3, **caractérisé en ce que** la phase de moulage comprend les étapes suivantes :
- verser une ou plusieurs couches de caillé dans la faisselle avec la plaque amorçage sans motif disposée au fond de la faisselle,
- lorsque l'ensemble du caillé prévu est versé dans la faisselle, placer la deuxième plaque sur le dessus du caillé versé,
- retourner l'ensemble comprenant la faisselle, la plaque d'amorçage et la deuxième plaque de façon à positionner la faisselle sur la deuxième plaque,
- remplacer la plaque d'amorçage par la première plaque,
- retourner l'ensemble comprenant la faisselle, la première plaque et la deuxième plaque de façon à positionner la faisselle sur la première plaque.

5. Procédé selon la revendication 3, **caractérisé en ce que** la phase de moulage comprend les étapes suivantes :
- verser une ou plusieurs couches de caillé dans la faisselle avec la plaque d'amorçage sans motif disposée au fond de la faisselle,
- lorsque l'ensemble du caillé prévu est versé dans la faisselle, placer une deuxième plaque d'amorçage également sans motif sur le dessus du caillé versé.

6. Procédé selon l'une quelconque des revendications précédentes, **caractérisé en ce que** la faisselle comprend le long de sa paroi interne un premier repère de forme complémentaire à un deuxième repère réalisé sur chaque plaque destinée à glisser dans la faisselle, de sorte que les plaques peuvent glisser dans la faisselle avec toujours une même orientation.

7. Procédé selon la revendication 5, **caractérisé en ce que** le repère est un méplat et la faisselle présente une section circulaire.

8. Procédé selon l'une quelconque des revendications précédentes, **caractérisé en ce que** la première plaque et/ou la deuxième plaque comporte des rainures réalisées sur une partie de l'épaisseur de la plaque sur la face destinée à être en contact avec le caillé.

9. Procédé selon l'une quelconque des revendications précédentes, **caractérisé en ce que** la première plaque et la deuxième plaque comportant chacun un motif, les deux motifs sont différents.

10. Procédé selon l'une quelconque des revendications précédentes, **caractérisé en ce que** la phase d'égouttage est suivie d'une phase d'affinage pendant laquelle au moins une plaque d'affinage est placée sous le fromage, cette plaque d'affinage comprenant le motif sur la face en contact avec le fromage.

11. Procédé selon la revendication 10, **caractérisé en ce que** la plaque d'affinage est ajourée sur la partie ne comportant pas le motif.

12. Procédé selon la revendication 10 ou 11, **caractérisé en ce que** lorsque le fromage est marqué sur les deux faces, la phase d'affinage comprend plusieurs étapes de retournement du fromage reposant sur la plaque d'affinage ; chaque retournement comprend les étapes suivantes :
- poser une plaque d'affinage secondaire sur le fromage,
- retourner l'ensemble comprenant la plaque d'affinage placée en dessous du fromage, le fromage et la plaque d'affinage secondaire placée au dessus du fromage,
- retirer la plaque d'affinage placée désormais au dessus du fromage.

13. Plaque de marquage d'un fromage à patte molle ou fromage frais obtenu à partir d'un caillé, comprenant une plaque en matériau biocompatible et un motif en matériau biocompatible réalisé sur une face de la plaque et en protubérance par rapport à la surface de cette face, ce motif étant destiné à venir en prise avec le caillé.

14. Plaque de marquage d'un fromage à patte molle ou fromage frais selon la revendication 13, **caractérisé en ce qu'**il comprend en outre un repère en périphérie destiné à coopérer avec un repère complémentaire réalisé sur une faisselle.

15. Faisselle pour un marquage d'un fromage à patte molle ou fromage frais obtenu à partir d'un caillé, comprenant :
- un cylindre creux perforé pour laisser passer du liquide, et
- un repère complémentaire réalisé le long d'une paroi interne de la faisselle et destiné à coopérer avec un repère d'une plaque de marquage.
